# DEMANDE DE BREVET EUROPEEN

(11) **EP 1 351 531 A1**
(43) Date de publication de la demande: **08.10.2003**
(21) Numéro de dépôt: 03356039.2
(22) Date de dépôt: 04.03.2003
(51) Int. Cl.: H04Q 7/32, H04L 29/08

(54) **Procédé de téléchargement d'éléments d'informations sur des téléphones mobiles**

(30) Priorité: 04.03.2002 FR 0202738
(71) Demandeur: Swap Com, 69007 Lyon (FR)
(72) Inventeur: Segura, Fabrice, 69330 Meyzieu (FR); Buisson, Cyrille, 69005 Lyon (FR)
(74) Mandataire: Bratel, Gérard

(57) **Abrégé**

Le procédé permet de simplifier l'usage de services de téléchargement d'éléments d'informations, tels que les services de téléchargement de sonneries ou de fonds d'écran, ou encore d'applets, sur des téléphones mobiles qui permettent cette opération au travers du protocole WAP. Le système d'information qui gère le service envoie au téléphone mobile, qui doit recevoir l'élément d'information demandé, un message SMS de type "WAP PUSH OTA" qui contient les informations nécessaires pour la connexion au serveur de téléchargement (ou un message SMS de type "EMS" qui contient un hyperlien contenant les informations nécessaires pour la connexion à ce serveur), l'identification de l'élément à télécharger, et le rapprochement avec la commande initiale de ce chargement et son éventuel paiement. Ceci permet de "personnaliser" un téléphone mobile, en évitant la saisie fastidieuse des informations nécessaires sur le clavier du téléphone mobile, et en limitant les manipulations.

## Description

La présente invention concerne un procédé permettant de simplifier la mise en oeuvre et l'ergonomie de services de téléchargement pour terminaux de téléphonie mobile, tels que les services de téléchargement de sonneries ou de fonds d'écran, d'applets (microprogrammes), ou d'autres éléments de "personnalisation" d'un téléphone mobile, dès lors que ces téléchargements doivent s'effectuer au travers du protocole WAP. Ce procédé exploite soit une autre fonctionnalité du protocole WAP, le "PUSH OTA", soit une fonctionnalité normalisée d'EMS (évolution du service SMS), à savoir "l'hyperlien", et il permet à l'utilisateur d'effectuer l'opération sans nécessiter de fastidieuses saisies d'information sur le clavier du terminal pour le connecter au service.

De nombreux terminaux de téléphonie mobile des réseaux GSM, GPRS, CDMA et UMTS notamment, et sans que cette liste soit limitative, acceptent le téléchargement de divers éléments d'informations tels que des sonneries, des images (logos, fonds d'écran), ou des jeux de paramètres (pour la connexion à des services WAP et/ou GPRS), sans que cette seconde liste soit limitative. Les données téléchargées sont transmises à l'intérieur de messages SMS. Un message SMS permet de véhiculer 140 octets. Plus récemment, et notamment en raison de la taille des éléments à télécharger qui nécessiteraient un trop grand nombre de messages SMS pour être transmis, sont apparus des téléphones offrant ce type de fonctionnalité, mais au travers du protocole WAP.

Les services qui proposent des téléchargements pour téléphones mobiles utilisent différentes techniques pour permettre à un utilisateur de choisir l'élément qu'il veut télécharger, d'indiquer le type de son terminal, et éventuellement d'acquitter directement ou indirectement le paiement correspondant : catalogues papier, serveurs vocaux, services Web. Une fois l'élément choisi et éventuellement le paiement acquitté, l'utilisateur ayant indiqué son numéro de téléphone, l'élément ainsi commandé peut être téléchargé grâce à l'envoi d'un ou plusieurs messages SMS directement sur son téléphone mobile.

Dans les cas des téléchargements en protocole WAP, l'utilisateur doit connecter son téléphone mobile sur un site WAP, où il pourra prendre livraison de sa commande. Or la connexion sur un site WAP propose la saisie de son URL sur le terminal, et selon les modes de réalisation d'un tel service, la saisie d'une référence de la commande. Malheureusement, les claviers des téléphones mobiles sont usuellement peu pratiques pour effectuer de telles saisies.

Le procédé proposé par la présente invention pour résoudre ce problème est le suivant :
- Les techniques utilisées jusqu'ici pour le choix de l'élément à télécharger, sa pré-visualisation, et l'éventuel acquittement de son paiement restent les mêmes que dans le cas des téléchargements par SMS. En particulier, l'utilisateur indique le numéro de son téléphone mobile au système informatique qui enregistre sa commande.
- Le système informatique envoie alors au mobile un message SMS contenant un message de type "WAP PUSH OTA", selon le procédé décrit dans la norme WAP. Ce message SMS contiendra l'URL d'une page WAP, accompagné d'arguments qui permettent de symboliser une référence de la commande effectuée à l'étape précédente pour l'élément à télécharger.
- A sa réception sur le terminal, ce message propose par une interaction simple (selon les types de terminaux, un clic, ou l'appui d'une touche de validation) la connexion au service WAP, et l'appel de l'URL spécifiée dans le message "WAP PUSH OTA", ainsi que ses arguments.
- Le système information ainsi sollicité par le terminal au travers de l'appel de l'URL WAP, effectue le rapprochement entre la référence de la commande contenue dans les arguments de l'URL appelée et l'enregistrement initial de cette commande, délivre alors l'élément à télécharger, et enregistre que la "livraison" a été effectuée. Cette opération de rapprochement de la référence de la commande permet d'éviter de multiples téléchargements de l'élément sélectionné, notamment par un autre téléphone mobile.

Une variante de ce procédé consiste à envoyer au téléphone mobile non pas un message SMS contenant un message de type "WAP PUSH OTA", mais un message EMS contenant un "hyperlien", tel que décrit dans la norme 3GPP TS 23.040 à partir de la version 5.1 de ce document. Les manipulations à effectuer par l'utilisateur du terminal sont similaires, à ceci près que le message EMS peut être stocké dans le terminal et utilisé ultérieurement, ce qui peut être avantageux si la connexion WAP venait à échouer lors de la procédure.

Un mode de réalisation, dans le cas où l'élément à télécharger est un fond d'écran choisi en utilisant un catalogue "papier", consiste à effectuer la commande de l'élément en utilisant un serveur vocal, et la livraison en utilisant un message "EMS" contenant un hyperlien.

Dans ce mode de réalisation, le catalogue permet de voir les images proposées en téléchargement, ainsi qu'un numéro de référence du produit associé. L'utilisateur du service doit appeler un serveur vocal, généralement sur un numéro d'appel dit "surtaxé", ce qui permet d'acquitter le paiement de la prestation. Il saisit avec le clavier du téléphone qu'il utilise, le numéro de référence de l'image qu'il désire télécharger, le numéro de son téléphone mobile sur lequel l'image doit être téléchargée, et indique le type de téléphone mobile dont il s'agit. Le système informatique lié au serveur vocal enregistre cette commande, et lui associe un numéro de référence unique. Selon les variantes de réalisation, ce numéro de référence sera encrypté par diverses méthodes afin qu'il soit extrêmement improbable de deviner à l'avance un numéro de référence valide sur le système. Le système informatique compose alors un message SMS "EMS" et l'envoie au téléphone mobile sur lequel l'image doit être téléchargée. Ce message EMS contient un hyperlien avec l'URL WAP qui permet de se connecter à ce même système informatique, et en paramètre de cette URL le numéro de référence de la commande composé à l'étape précédente. L'utilisateur qui reçoit ce message active alors cet hyperlien, ce qui provoque la connexion du téléphone mobile au système informatique en utilisant le protocole WAP, et l'envoi de la requête contenant le numéro de référence de la commande. Le système informatique répond à cette requête avec l'image à télécharger encodée selon le format correctement interprété par le téléphone mobile. L'opération est alors terminée, et l'utilisateur dispose désormais de l'image sur son téléphone mobile. Le système informatique enregistre finalement que le numéro de la référence de la commande a été utilisé, afin de ne pas permettre un autre téléchargement en utilisant cette même référence.

La procédure ci-dessus est identique en utilisant un message "WAP PUSH OTA", et le fait d'indiquer au système informatique le type du téléphone mobile à télécharger permettra à celui-ci de choisir entre l'une ou l'autre des variantes du procédé si le type de téléphone mobile considéré n'acceptait que l'une d'entre elles.

## Revendications

1. Procédé permettant de simplifier l'usage de services de téléchargement d'éléments d'informations, tels que les services de téléchargement de sonneries ou de fonds d'écrans, ou encore de microprogrammes (applets), ou autres éléments de "personnalisation" d'un téléphone mobile, sur des téléphones mobiles qui permettent cette opération au travers du protocole WAP, **caractérisé par** l'envoi par le système d'information qui gère le service, au téléphone mobile qui doit recevoir l'élément d'information demandé, d'un message SMS de type "WAP PUSH OTA" qui contient les informations nécessaires pour la connexion au serveur de téléchargement, l'identification de l'élément à télécharger, et le rapprochement avec la commande initiale de ce téléchargement et son éventuel paiement, ce qui permet d'éviter la saisie des informations nécessaires sur le clavier du téléphone mobile et limite les manipulations.

2. Procédé permettant de simplifier l'usage de services de téléchargement d'éléments d'informations, tels que les services de téléchargement de sonneries ou fonds d'écrans, ou encore de microprogrammes (applets), ou autres éléments de "personnalisation" d'un téléphone mobile, sur des téléphones mobiles qui permettent cette opération au travers du protocole WAP, **caractérisé par** l'envoi par le système d'information qui gère le service, au téléphone mobile qui doit recevoir l'élément d'information demandé, d'un message SMS de type "EMS" qui contient un hyperlien contenant les informations nécessaires pour la connexion au serveur de téléchargement, l'identification de l'élément à télécharger, et le rapprochement avec la commande initiale de ce téléchargement et son éventuel paiement, ce qui permet d'éviter la saisie des informations nécessaires sur le clavier du téléphone mobile et limite les manipulations.

3. Procédé selon la revendication 1 ou 2, **caractérisé par** la génération d'un numéro de référence unique associé à chaque commande, dont l'encryptage permet de rendre extrêmement improbable la possibilité de deviner un numéro valide de référence.

4. Procédé selon la revendication 3, **caractérisé par** l'utilisation de ce numéro de référence unique pour obtenir la livraison de l'élément à télécharger, et la gestion par le système d'information qui gère le service de ces références, afin qu'elles ne puissent chacune servir à déclencher qu'un seul et unique téléchargement.

5. Procédé selon l'une quelconque des revendications 1 à 4, **caractérisé en ce que** le choix de l'une ou l'autre des variantes du procédé, à savoir WAP PUSH OTA ou EMS contenant un hyperlien, est automatiquement effectué par le système informatique qui gère le service, en fonction du type de téléphone mobile à télécharger.
